# EUROPÄISCHE PATENTSCHRIFT

(11) **EP 3 178 210 B1**
(45) Veröffentlichungstag und Bekanntmachung des Hinweises auf die Patenterteilung: **15.01.2020**
(21) Anmeldenummer: 15741737.9
(22) Anmeldetag: 28.07.2015
(51) Int. Cl.: H04L 29/06, H04W 12/00, H04W 12/02, H04W 12/04, H04L 9/08

(54) **KOMMUNIKATIONSSYSTEM MIT PKI-SCHLÜSSELPAAR FÜR MOBILES ENDGERÄT**
COMMUNICATION SYSTEM WITH PKI KEY PAIR FOR MOBILE TERMINAL
SYSTÈME DE COMMUNICATION COMPORTANT UNE PAIRE DE CLÉS PKI POUR TERMINAL MOBILE

(30) Priorität: 04.08.2014 DE 102014011687
(43) Veröffentlichungstag der Anmeldung: 14.06.2017
(73) Patentinhaber: Giesecke+Devrient Mobile Security GmbH, 81677 München (DE)
(72) Erfinder: SCHÄFER, Frank, 82178 Puchheim (DE); MARTINI, Ullrich, 81669 München (DE)
(86) Internationale Anmeldenummer: PCT/EP2015/001556
(87) Internationale Veröffentlichungsnummer: WO 2016/020046

(56) Entgegenhaltungen:
- WO-A2-02/102009
- WO-A2-03/091858
- US-B1- 8 085 937

## Beschreibung

Die Erfindung betrifft ein Kommunikationssystem, umfassend ein mobiles Endgerät und einen Kommunikationspartner, wobei für das Endgerät ein PKI-Schlüsselpaar umfassend einen privaten Schlüssel und einen öffentlichen Schlüssel eingerichtet ist, nach dem Oberbegriff von Anspruch 1.

Zur Nutzung eines mobilen Endgeräts wie Smartphones oder Mobiltelefons in einem Mobilfunknetzwerk eines Netzbetreibers enthält das Endgerät ein Teilnehmeridentitätsmodul mit einer Subskription. Das Teilnehmeridentitätsmodul kann entweder als entfernbare Plug-In SIM-Karte (SIM = Subscriber Identity Module) oder USIM-Karte (Universal SIM) oder UICC (Universal Integrated Circuit Card) gestaltet sein, oder alternativ als festeingelötetes eUICC (embedded UICC) oder eSIM oder eUSIM. Die Subskription ist durch einen Datensatz gebildet, der den Aufbau, Betrieb und Abbau einer Verbindung des Endgeräts im Mobilfunknetzwerk ermöglicht. Als Verbindung kann z.B. eine Sprachverbindung vorgesehen sein, um zu telefonieren, oder eine Datenverbindung, um Dateien, E-Mails, gestreamte Sprachdaten und sonstige Daten zu übertragen.

In zunehmendem Maß besteht der Wunsch, in das Teilnehmeridentitätsmodul, zusätzlich zum eigentlichen Grund-Dienst Sprachverbindung (Telefonie) und ggf. Datenverbindung, zusätzliche kryptographische Dienste zu implementieren, wie beispielsweise Dienste für Verschlüsselung von Sprachverbindungen oder Datenverbindungen, wobei Sprache bzw. Daten in mit einem Sitzungsschlüssel verschlüsselter Form übertragen werden. Beispielsweise bietet der Mobilfunk-Netzbetreiber Vodafone unter der Bezeichnung "Secure Call" eine App für verschlüsselte Sprachverbindungen an ("Kanzler-Phone für alle"), sowie weitere ähnliche Dienste. Um die Dienste zu ermöglichen, wird im Endgerät, und dabei möglichst im Teilnehmeridentitätsmodul, eine PKI-Infrastruktur eingerichtet. Dazu wird im Teilnehmeridentitätsmodul ein langlebiger privater PKI-Schlüssel gespeichert. Der dem privaten PKI-Schlüssel entsprechende öffentliche PKI-Schlüssel wird an Kommunikationspartner ausgegeben. Die PKI-Infrastruktur ermöglicht den Kommunikationspartnern, den Sitzungsschlüssel auszutauschen. Das Teilnehmeridentitätsmodul bildet eine gesicherte Umgebung, in welcher private PKI-Schlüssel vor unberechtigtem Zugriff gesichert abgespeichert sind. Manche Endgeräte gewähren keinen Zugriff auf das Teilnehmeridentitätsmodul, um über die Subskription hinaus zusätzliche Schlüssel im Teilnehmeridentitätsmodul abzuspeichern. In diesem Fall werden die privaten PKI-Schlüssel direkt im Endgerät abgespeichert, wo sie vergleichsweise ungeschützt sind.

Das Dokument US 8,085,937 B1 aus dem Stand der Technik offenbart in Fig. 5 und der zugehörigen Beschreibung ein Kommunikationssystem mit einem entfernten Schlüsselerzeugungs-Server. Das System umfasst ein mobiles Endgerät 40B und einen Kommunikationspartner 60B, wobei für das Endgerät ein PKI-Schlüsselpaar umfassend einen privaten Schlüssel und einen öffentlichen Schlüssel eingerichtet ist. Bei einem vom mobilen Endgerät entfernten Server-System ist der öffentliche Schlüssel abgespeichert. Der entfernte Server ist eingerichtet, einen Sitzungsschlüssel bereitzustellen, den Sitzungsschlüssel mit dem öffentlichen Schlüssel zu verschlüsseln und den verschlüsselten Sitzungsschlüssel an das Endgerät zu übermitteln. Das Endgerät ist dazu eingerichtet, den vom Server erhaltenen Sitzungsschlüssel mit dem privaten Sitzungsschlüssel zu entschlüsseln. Der Kommunikationspartner erhält den Sitzungsschlüssel ebenfalls, verschlüsselt damit Daten ("Voice") und sendet die an das Endgerät, das sie mit dem Sitzungsschlüssel wieder entschlüsseln kann.

Der Erfindung liegt die Aufgabe zu Grunde, ein sicheres, effizientes Kommunikations-System zu schaffen, das auch dann verwirklichbar ist, wenn eine hochsichere Speicherung von Schlüsseln im Endgerät, z.B. im Teilnehmeridentitätsmodul, nicht möglich ist.

Die Aufgabe wird gelöst durch ein Kommunikationssystem nach Anspruch 1. Vorteilhafte Ausgestaltungen der Erfindung sind in den abhängigen Ansprüchen angegeben.

Das erfindungsgemäße Kommunikationssystem nach Anspruch 1 umfasst ein mobiles Endgerät und einen Kommunikationspartner (ein anderes elektronisches Kommunikationsgerät). Für das Endgerät ist ein PKI-Schlüsselpaar umfassend einen privaten Schlüssel und einen öffentlichen Schlüssel eingerichtet. Beim Kommunikationspartner ist der öffentliche Schlüssel abgespeichert. Der Kommunikationspartner ist dazu eingerichtet, einen Sitzungsschlüssel bereitzustellen, Daten mit dem Sitzungsschlüssel zu verschlüsseln, den Sitzungsschlüssel mit dem öffentlichen Schlüssel zu verschlüsseln und die verschlüsselten Daten an das Endgerät zu übermitteln.

Das Kommunikationssystem zeichnet sich dadurch aus, dass es weiter ein vom mobilen Endgerät entferntes Server-System umfasst, in dem der private Schlüssel in einer gesicherten Umgebung abgespeichert ist. Der Kommunikationspartner ist dabei weiter dazu eingerichtet, den verschlüsselten Sitzungsschlüssel an das Server-System zu übermitteln. Zudem ist das Server-System dazu eingerichtet, den Sitzungsschlüssel für das Endgerät mit dem privaten Schlüssel zu entschlüsseln und in entschlüsselter Form zur Entschlüsselung der Daten an das Endgerät zu übermitteln.

Die gesicherte Umgebung auf dem Server-System bildet somit einen ausgelagerten sicheren Speicherbereich für den langlebigen privaten Schlüssel, der eine vergleichbare Sicherheit bietet wie ein im Endgerät betriebenes Teilnehmeridentitätsmodul wie z.B. eine SIM-Karte. Im Endgerät wird nur der Sitzungsschlüssel vorgesehen, der bedarfsweise, z.B. falls der Sitzungsschlüssel ausgespäht oder gestohlen worden ist, gegen einen neuen Sitzungsschlüssel ausgetauscht werden kann. Der Sitzungsschlüssel kann einfach ausgetauscht werden, da er z.B. durch den Kommunikationspartner festgelegt werden kann. Den privaten Schlüssel im Endgerät auszutauschen wäre aufwendiger, da allen möglichen Kommunikationspartnern der entsprechende neue öffentliche Schlüssel mitgeteilt werden müsste.

Somit ist gemäß Anspruch 1 ein sicheres, effizientes KommunikationsSystem geschaffen, das auch dann verwirklichbar ist, wenn eine hochsichere Speicherung von Schlüsseln im Endgerät, z.B. im Teilnehmeridentitätsmodul, nicht möglich ist.

Im Vergleich zu einem lokal im Teilnehmeridentitätsmodul des Endgeräts gespeicherten privaten Schlüssel hat der im Server-System gespeicherte private Schlüssel sogar noch den zusätzlichen Vorteil, dass auch der private Schlüssel mit vertretbarem Aufwand ausgetauscht, also durch einen neuen Schlüssel ersetzt werden kann.

Der Sitzungsschlüssel wird wahlweise durch den Kommunikationspartner festgelegt. Alternativ nimmt der Kommunikationspartner den Sitzungsschlüssel von einem Schlüsselerzeuger entgegen, z.B. vom Server-System. Wahlweise ist als Sitzungsschlüssel eine Zufallszahl vorgesehen, z.B. eine vom Kommunikationspartner erzeugte Zufallszahl.

Der Kommunikationspartner ist gemäß einer ersten Alternative dazu eingerichtet, den mit dem öffentlichen Schlüssel verschlüsselten Sitzungsschlüssel direkt an das Server-System zu übermitteln. Das Server-System nimmt den verschlüsselten Sitzungsschlüssel vom Kommunikationspartner entgegen, entschlüsselt ihn mit dem privaten Schlüssel des Endgeräts - der ja beim Server-System abgespeichert ist - und sendet den entschlüsselten Sitzungsschlüssel an das Endgerät. Das Endgerät entschlüsselt schließlich die vom Kommunikationspartner verschlüsselt Daten empfangen Daten mit dem vom Server-System empfangenen Sitzungsschlüssel.

Gemäß einer zweiten Alternative ist der Kommunikationspartner dazu eingerichtet, den verschlüsselten Sitzungsschlüssel über das Endgerät an das Server-System zu übermitteln. Das Endgerät ist dabei weiter dazu eingerichtet, den verschlüsselten Sitzungsschlüssel vom Kommunikationspartner entgegenzunehmen und an das Server-System zu übermitteln. Das weitere Verfahren verläuft wie bei der ersten Alternative. Das Server-System entschlüsselt also mit dem privaten Schlüssel den Sitzungsschlüssel und sendet ihn an das Endgerät, welches mit dem Sitzungsschlüssel die Daten entschlüsselt. Bei der zweiten Alternative benötigt nur das Endgerät eine Verbindung zum Server-System, nicht jedoch der Kommunikationspartner.

Vorzugsweise ist zwischen dem Endgerät und dem Server-System ein sicherer Kommunikationskanal eingerichtet. Dabei ist das Server-System dazu eingerichtet, den Sitzungsschlüssel über den sicheren Kommunikationskanal an das Endgerät zu übermitteln. Hierdurch ist gewährleistet, dass der entschlüsselte, im Klartext vorliegende Sitzungsschlüssel nicht ausgespäht wird.

Für den sicheren Kommunikationskanal ist wahlweise zumindest ein asymmetrisches Schlüsselpaar im Server-System und im Endgerät verteilt abgespeichert. Zumindest ist im Server-System ein asymmetrisches Schlüsselpaar abgespeichert, das die (mit anderem Schlüssel neu) verschlüsselte Übermittlung des entschlüsselten Sitzungsschlüssels vom Server-System an das Endgerät ermöglicht. Das asymmetrische Schlüsselpaar des sicheren Kommunikationskanals wird vorzugsweise ausschließlich zum Betrieb des sicheren Kanals zwischen dem Endgerät und dem Server-System verwendet, und insbesondere niemals an Kommunikationspartner ausgegeben. Hierdurch kann das asymmetrische Schlüsselpaar des sicheren Kommunikationskanals im Fall, dass es nicht mehr sicher ist, z.B. weil es ausgespäht wurde, relativ einfach ausgetauscht (d.h. erneuert) werden. Z.B. ist im Server-System ein öffentlicher Schlüssel für den Kommunikationskanal abgespeichert, und im Endgerät der entsprechende private Schlüssel. Wahlweise ist für den sicheren Kommunikationskanal ein weiteres asymmetrisches Schlüsselpaar vorgesehen, für die Übertragung von Daten in die umgekehrte Richtung, d.h. vom Endgerät zum Server-System.

Wahlweise hat der Sitzungsschlüssel eine Gültigkeit, die nur einen einzelnen Schlüssel-Verwendungs-Vorgang umfasst, und die Gültigkeit des Sitzungsschlüssels endet, sobald der Sitzungsschlüssel für den Schlüssel-Verwendungs-Vorgang verwendet worden ist. Als Schlüssel-Verwendungs-Vorgang ist wahlweise eine Entschlüsselung vorgesehen. Der Sitzungsschlüssel ist somit kurzlebig. Wird der kurzlebige Sitzungsschlüssel ausgespäht, ist der Schaden gering. Würde der langlebige private Schlüssel des Endgeräts ausgespäht, wäre der Schaden erheblich.

Wahlweise ist das Endgerät dazu eingerichtet, auf dem Endgerät eine Mehrzahl von entschlüsselten Sitzungsschlüsseln vom Server-System entgegenzunehmen und zur späteren Verwendung zu speichern, ohne dass zwischen den Verwendungen der Mehrzahl von Sitzungsschlüsseln eine Verbindung zwischen dem Server-System und dem Endgerät erforderlich ist. Bei dieser Variante speichert das Endgerät mehrere Sitzungsschlüssel auf Vorrat. Die Variante ist insbesondere für Sitzungsschlüssel vorteilhat, die nur für einen einzigen Entschlüsselungsvorgang verwendbar sind. Hierbei kann das Endgerät sequentiell mehrere Kommunikationssitzungen mit Kommunikationspartnern durchführen, bei denen das Endgerät verschlüsselte Daten von einem Kommunikationspartner entgegennimmt und im Endgerät entschlüsselt. Zwischen zwei Kommunikationssitzungen muss das Endgerät dabei keine Verbindung zum Server-System aufnehmen, solange bis die auf Vorrat gespeicherten Sitzungsschlüssel aufgebraucht sind.

Wahlweise hat der Sitzungsschlüssel eine zeitlich begrenzte Gültigkeitsdauer, so dass der Sitzungsschlüssel mit Ablauf der Gültigkeitsdauer ohne weiteres Zutun ungültig wird. Hierdurch kann beispielsweise erreicht werden, dass auf Vorrat gespeicherte Sitzungsschlüssel, die nicht verwendet werden, nach einer zulässigen Höchst-Gültigkeitsdauer ungültig werden, auch wenn sie nicht verwendet werden.

Wahlweise ist als Sitzungsschlüssel ein symmetrischer Schlüssel vorgesehen. Symmetrische Verschlüsselungs- und Entschlüsselungs-Algorithmen sind wesentlich schneller als asymmetrische. Daher sind für die Verschlüsselung größerer Datenmengen symmetrische Algorithmen vorteilhaft.

Alternativ kann als Sitzungsschlüssel ein asymmetrischer Schlüssel vorgesehen sein, insbesondere ein vom privaten Schlüssel abgeleiteter privater Sitzungsschlüssel, vorzugsweise ein kurzlebiger abgeleiteter Schlüssel.

Als Daten sind wahlweise ein oder mehrere der folgenden vorgesehen: Sprachdaten, Dateien, allgemeine Daten, E-Mails. Bei Sprachdaten beinhaltet eine Kommunikationssitzung zwischen dem Endgerät und dem Kommunikationspartner also ein verschlüsseltes Telefonat oder verschlüsseltes VoIP (Voice over Internet Protocol). Bei Dateien, allgemeinen Daten bzw. E-Mails beinhaltet eine Kommunikationssitzung zwischen dem Endgerät und dem Kommunikationspartner eine verschlüsselte Übertragung von Dateien oder allgemeinen Daten, insbesondere auch von E-Mails.

Wahlweise ist im Endgerät und beim Kommunikationspartner jeweils eine Applikation vorgesehen, um Kommunikationssitzungen zu betreiben, in denen verschlüsselte Daten vom Kommunikationspartner an das Endgerät übertragen und dort entschlüsselt werden.

Wahlweise umfasst das Kommunikationssystem mehrere Kommunikationspartner, die alle den gleichen öffentlichen Schlüssel des Endgeräts haben.

Das Endgerät kann, mit anderen Schlüsselpaaren, gleichzeitig Kommunikationspartner sein und umgekehrt.

Im Folgenden wird die Erfindung an Hand von Ausführungsbeispielen und unter Bezugnahme auf die Zeichnung näher erläutert, in der zeigen:

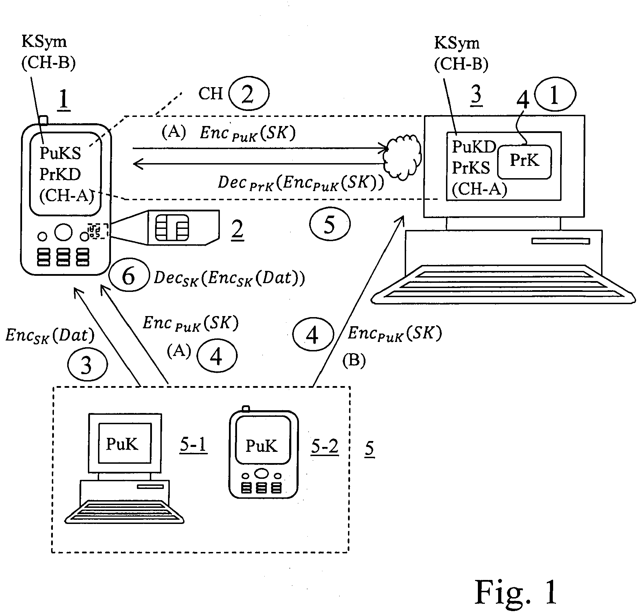

- Fig. 1: ein Kommunikationssystem, gemäß einer Ausführungsform der Erfindung, umfassend zwei Alternativen A und B.

Fig. 1 zeigt ein Kommunikationssystem, gemäß einer Ausführungsform der Erfindung, umfassend zwei Alternativen A und B. Das Kommunikationssystem umfasst ein mobiles Endgerät 1 (Smartphone), mit einer im Endgerät 1 betriebenen SIM-Karte 2 (=Teilnehmeridentitätsmodul), ein Server-System 3 mit einer sicheren Umgebung 4, sowie einen Kommunikationspartner 5. Der Kommunikationspartner 5 ist ein elektronisches Kommunikationsgerät, z.B. ein PC 5-1 oder ein (weiteres) mobiles Endgerät 5-2.

Im Folgenden wird eine Kommunikations-Sitzung zwischen dem Endgerät 1 und dem Kommunikationspartner 5 beschrieben.

In einem Schritt 1 erzeugt das Server-System 3 in der sicheren Umgebung 4 ein asymmetrisches Schlüsselpaar umfassend einen privaten Schlüssel PrK und einen öffentlichen Schlüssel PuK. Der private Schlüssel PrK verbleibt sicher in der sicheren Umgebung 4 des Server-Systems 3. Der öffentliche Schlüssel PuK wird einerseits im Server-System 3 abgespeichert und andererseits an alle potentiellen, interessierten Kommunikationspartner 5 des Endgeräts 1 verteilt. Optional kann der öffentliche Schlüssel PuK auch im Endgerät 1 abgespeichert sein, er muss aber nicht.

In einem Schritt 2 wird zwischen dem Server-System 3 und dem Endgerät 1 ein sicherer Kommunikationskanal CH eingerichtet, der zumindest ermöglicht, dass das Server-System 3 an das Endgerät 1 gesichert Nachrichten senden kann. Beispielsweise ist hierzu im Server-System 3 ein öffentlicher Kanal-CH-Schlüssel PuKD des Endgeräts 1 abgespeichert (D = Device = Endgerät), und der entsprechende private Kanal-CH-Schlüssel PrKD im Endgerät 1 abgespeichert. Das Server-System 3 verschlüsselt sicher zu übertragende Daten (z.B. den Sitzungsschlüssel) mit dem öffentlichen Kanal-CH-Schlüssel PuKD, sendet sie an das Endgerät 1, und das Endgerät 1 entschlüsselt die Daten mit dem privaten Kanal-CH-Schlüssel PrKD. Optional umfasst der sichere Kanal CH ein weiteres Schlüsselpaar PrKS, PuKS (S = Server) zur Übertragung von Daten vom Endgerät 1 zum Server-System 3. Die Schlüssel PrKD, PuKD und ggf. PrKS, PuKS des sicheren Kanals CH werden ausschließlich zum Betrieb des sicheren Kanals CH zwischen dem Endgerät 1 und dem Server-System 3 verwendet, und insbesondere niemals an Kommunikationspartner 5 ausgegeben.

In einem Schritt 3 verschlüsselt der Kommunikationspartner 5 Daten DAT mit einem Sitzungsschlüssel SK und sendet die verschlüsselten Daten Enc(SK)(DAT) an das Endgerät 1. Der Sitzungsschlüssel SK wird vom Kommunikationspartner 5 entweder selbst erzeugt oder aus anderer Quelle entgegengenommen, insbesondere z.B. vom Server-System 3. Im Ausführungsbeispiel aus Fig. 1 erzeugt der Kommunikationspartner 5 selbst einen symmetrischen Sitzungsschlüssel SK zur Datenverschlüsselung.

In einem Schritt 4 verschlüsselt der Kommunikationspartner 5 den Sitzungsschlüssel SK mit dem öffentlichen Schlüssel des Endgeräts 1 zu einem Schlüssel-Chiffrat Enc(PuK)(SK).

Gemäß einer Alternative A sendet, in Schritt 4, der Kommunikationspartner 5 den verschlüsselten Sitzungsschlüssel Enc(PuK)(SK) an das Endgerät 1, vorzugsweise zusammen mit den verschlüsselten Daten Enc(SK)(DAT) gemäß Schritt 3. Das Endgerät 1 sendet den verschlüsselten Sitzungsschlüssel Enc(PuK)(SK) weiter an das Server-System 3, welches selbigen empfängt.

Gemäß einer Alternative B sendet, in Schritt 4, der Kommunikationspartner 5 den verschlüsselten Sitzungsschlüssel Enc(PuK)(SK) direkt an das Server-System 3, welches selbigen empfängt.

In einem Schritt 5 entschlüsselt das Server-System 3 den empfangenen verschlüsselten Sitzungsschlüssel Enc(PuK)(SK) mit dem privaten Schlüssel PrK des Endgeräts 1. Hierdurch ist der Sitzungsschlüssel SK im Klartext wiederhergestellt. Das Server-System 3 sendet den entschlüsselten Sitzungsschlüssel SK über den sicheren Kanal CH an das Endgerät 1.

Nun steht der Sitzungsschlüssel SK auf dem Endgerät 1 im Klartext zur Verfügung. In einem Schritt 6 entschlüsselt das Endgerät 1 mit dem Sitzungsschlüssel SK die vom Kommunikationspartner 5 empfangenen verschlüsselten Daten Enc(SK) (DAT) zu Daten DAT im Klartext, im Einzelnen: Dec(SK) (Enc(SK)(DAT)).

## Patentansprüche

1. Kommunikationssystem, umfassend ein mobiles Endgerät (1) und einen Kommunikationspartner (5), wobei für das Endgerät (1) ein PKI-Schlüsselpaar umfassend einen privaten Schlüssel (PrK) und einen öffentlichen Schlüssel (PuK) eingerichtet ist,
- wobei beim Kommunikationspartner (5) der öffentliche Schlüssel (PuK) abgespeichert ist,
- wobei der Kommunikationspartner (5) eingerichtet ist,
--- einen Sitzungsschlüssel (SK) bereitzustellen,
--- Daten (DAT) mit dem Sitzungsschlüssel (SK) zu verschlüsseln,
--- den Sitzungsschlüssel (SK) mit dem öffentlichen Schlüssel (PuK) zu verschlüsseln und
--- die verschlüsselten Daten (DAT) an das Endgerät (1) zu übermitteln, **dadurch gekennzeichnet, dass**
- das Kommunikationssystem weiter ein vom mobilen Endgerät (1) entferntes Server-System (3) umfasst, in dem der private Schlüssel (PrK) in einer gesicherten Umgebung (4) abgespeichert ist,
- der Kommunikationspartner (5) weiter dazu eingerichtet ist, den mit dem öffentlichen Schlüssel (PuK) verschlüsselten Sitzungsschlüssel (SK) an das Server-System (3) zu übermitteln,
- das Server-System (3) dazu eingerichtet ist, den Sitzungsschlüssel (SK) für das Endgerät (1) mit dem privaten Schlüssel (PrK) zu entschlüsseln und in entschlüsselter Form über einen sicheren Kommunikationskanal (CH) zur Entschlüsselung der Daten (DAT) an das Endgerät (1) zu übermitteln.

2. Kommunikationssystem nach Anspruch 1, wobei der Kommunikationspartner (5) dazu eingerichtet ist, den verschlüsselten Sitzungsschlüssel (SK) direkt an das Server-System (3) zu übermitteln.

3. Kommunikationssystem nach Anspruch 1, wobei der Kommunikationspartner (5) dazu eingerichtet ist, den verschlüsselten Sitzungsschlüssel (SK) über das Endgerät (1) an das Server-System (3) zu übermitteln, wobei das Endgerät (1) weiter dazu eingerichtet ist, den verschlüsselten Sitzungsschlüssel (SK) vom Kommunikationspartner (5) entgegenzunehmen und an das Server-System (3) zu übermitteln.

4. Kommunikationssystem nach einem der Ansprüche 1 bis 3, wobei für den sicheren Kommunikationskanal (CH) zumindest ein asymmetrisches Kommunikationskanalschlüsselpaar (PuKD, PrKD) im Server-System (3) und im Endgerät (1) verteilt abgespeichert ist.

5. Kommunikationssystem nach einem der Ansprüche 1 bis 4, wobei der Sitzungsschlüssel eine Gültigkeit hat, die nur einen einzelnen Schlüssel-Verwendungs-Vorgang umfasst, und die Gültigkeit des Sitzungsschlüssels (SK) endet, sobald der Sitzungsschlüssel (SK) für den Schlüssel-Verwendungs-Vorgang verwendet worden ist.

6. Kommunikationssystem nach einem der Ansprüche 1 bis 5, wobei das Endgerät (1) dazu eingerichtet ist, auf dem Endgerät (1) eine Mehrzahl von entschlüsselten Sitzungsschlüsseln (SK) vom Server-System (3) entgegenzunehmen und zur späteren Verwendung zu speichern, ohne dass zwischen den Verwendungen der Mehrzahl von Sitzungsschlüsseln (SK) eine Verbindung zwischen dem Server-System (3) und dem Endgerät (1) erforderlich ist.

7. Kommunikationssystem nach einem der Ansprüche 1 bis 6, wobei der Sitzungsschlüssel (SK) eine zeitlich begrenzte Gültigkeitsdauer hat, so dass der Sitzungsschlüssel mit Ablauf der Gültigkeitsdauer ungültig wird.

8. Kommunikationssystem nach einem der Ansprüche 1 bis 7, wobei als Sitzungsschlüssel (SK) ein symmetrischer Schlüssel vorgesehen ist.

9. Kommunikationssystem nach einem der Ansprüche 1 bis 8, wobei als Sitzungsschlüssel (SK) ein asymmetrischer Schlüssel vorgesehen ist, insbesondere ein vom privaten Schlüssel (PrK) abgeleiteter privater Sitzungsschlüssel.

10. Kommunikationssystem nach einem der Ansprüche 1 bis 9, wobei als Daten ein oder mehrere der folgenden vorgesehen sind: Sprachdaten, Dateien, allgemeine Daten, E-Mails.

## Claims

1. A communication system, comprising a mobile end device (1) and a communication partner (5), wherein a PKI key pair comprising a private key (PrK) and a public key (PuK) is arranged for the end device (1),
- wherein the public key (PuK) is stored at the communication partner (5),
- wherein the communication partner (5) is arranged
--- to supply a session key (SK),
--- to encrypt data (DAT) with the session key (SK),
--- to encrypt the session key (SK) with the public key (PuK) and
--- to transmit the encrypted data (DAT) to the end device (1), **characterized in that**
- the communication system further comprises a server system (3), remote from the mobile end device (1), in which the private key (PrK) is stored in a secure environment (4),
- the communication partner (5) is further arranged to transmit the session key (SK) encrypted with the public key (PuK) to the server system (3),
- the server system (3) is arranged to decrypt the session key (SK) for the end device (1) with the private key (PrK) and transmit it in decrypted form via a secure communication channel (CH) to the end device (1) for decrypting the data (DAT).

2. The communication system according to claim 1, wherein the communication partner (5) is arranged to transmit the encrypted session key (SK) directly to the server system (3).

3. The communication system according to claim 1, wherein the communication partner (5) is arranged to transmit the encrypted session key (SK) via the end device (1) to the server system (3), wherein the end device (1) is further arranged to accept the encrypted session key (SK) from the communication partner (5) and transmit it to the server system (3).

4. The communication system according to one of claims 1 to 3, wherein for the secure communication channel (CH) at least an asymmetric communication channel key pair (PuKD, PrKD) is stored in the server system (3) and in the end device (1) in a distributed manner.

5. The communication system according to any of claims 1 to 4, wherein the session key has a validity which comprises only one single key-employment operation, and the validity of the session key (SK) ends as soon as the session key (SK) has been employed for the key-employment operation.

6. The communication system according to any of claims 1 to 5, wherein the end device (1) is arranged to accept a plurality of decrypted session keys (SK) from the server system (3) on the end device (1) and store them for later employment, without requiring a connection between the server system (3) and the end device (1) between the employments of the plurality of session keys (SK).

7. The communication system according to any of claims 1 to 6, wherein the session key (SK) has a time-limited validity period so that the session key will become invalid upon expiry of the validity period.

8. The communication system according to any of claims 1 to 7, wherein a symmetric key is provided as a session key (SK).

9. The communication system according to any of claims 1 to 8, wherein there is provided as a session key (SK) an asymmetric key, in particular a private session key derived from the private key (PrK).

10. The communication system according to any of claims 1 to 9, wherein there are provided as data one or more of the following: speech data, files, general data, e-mails.

## Revendications

1. Système de communication comprenant un terminal (1) mobile et un partenaire de communication (5), cependant que, pour le terminal (1), une paire de clés PKI comprenant une clé privée (PrK) et une clé publique (PuK) est mise en place,
- cependant que, chez le partenaire de communication (5), la clé publique (PuK) est mémorisée
- cependant que le partenaire de communication (5) est configuré pour
- mettre à disposition une clé de session (SK),
- crypter des données (DAT) avec la clé de session (SK),
- crypter la clé de session (SK) avec la clé publique (PuK), et
- transmettre les données (DAT) cryptées au terminal (1),
**caractérisé en ce que**
- le système de communication comprend en outre un système serveur (3) éloigné du terminal (1) mobile et dans lequel la clé privée (PrK) est mémorisée dans un environnement (4) sécurisé,
- le partenaire de communication (5) est en outre configuré pour transmettre au système serveur (3) la clé de session (SK) cryptée avec la clé publique (PuK),
- le système serveur (3) est configuré pour décrypter avec la clé privée (PrK) la clé de session (SK) pour le terminal (1) et pour la transmettre au terminal (1) sous forme décryptée par l'intermédiaire d'un canal de communication (CH) sécurisé pour le décryptage des données (DAT).

2. Système de communication selon la revendication 1, cependant que le partenaire de communication (5) est configuré pour transmettre directement au système serveur (3) la clé de session (SK) cryptée.

3. Système de communication selon la revendication 1, cependant que le partenaire de communication (5) est configuré pour transmettre par l'intermédiaire du terminal (1) au système serveur (3) la clé de session (SK) cryptée, cependant que le terminal (1) est en outre configuré pour réceptionner de la part du partenaire de communication (5) la clé de session (SK) cryptée et pour la transmettre au système serveur (3).

4. Système de communication selon une des revendications de 1 à 3, cependant que, pour le canal de communication (CH) sécurisé, au moins une paire de clés asymétrique de canal de communication (PuKD, PrKD) est mémorisée de manière répartie dans le système serveur (3) et dans le terminal (1).

5. Système de communication selon une des revendications de 1 à 4, cependant que la clé de session a une validité qui ne comprend qu'une seule opération d'utilisation de clé, et que la validité de la clé de session (SK) s'achève dès que la clé de session (SK) a été utilisée pour l'opération d'utilisation de clé.

6. Système de communication selon une des revendications de 1 à 5, cependant que le terminal (1) est configuré pour réceptionner sur le terminal (1) de la part du système serveur (3)
une pluralité de clés de session (SK) décryptées et pour les mémoriser aux fins d'une utilisation ultérieure sans qu'une connexion entre le système serveur (3) et le terminal (1) ne soit nécessaire entre les utilisations de la pluralité de clés de session (SK).

7. Système de communication selon une des revendications de 1 à 6, cependant que la clé de session (SK) a une durée de validité limitée dans le temps, de telle sorte que la clé de session devient caduque après écoulement de la durée de validité.

8. Système de communication selon une des revendications de 1 à 7, cependant que, comme clé de session (SK), une clé symétrique est prévue.

9. Système de communication selon une des revendications de 1 à 8, cependant que, comme clé de session (SK), une clé asymétrique est prévue, en particulier une clé privée de session dérivée de la clé privée (PrK).

10. Système de communication selon une des revendications de 1 à 9, cependant que, comme données, un ou plusieurs des suivants sont prévus : données vocales, fichiers, données générales, e-mails.
